# EUROPEAN PATENT APPLICATION

(11) **EP 2 814 273 A1**
(43) Date of publication of application: **17.12.2014**
(21) Application number: 14171406.3
(22) Date of filing: 05.06.2014
(51) Int. Cl.: H04W 12/00, H04L 12/28, H04L 12/24, H04W 12/04, H04W 12/06, H04L 29/06

(54) **Method of connecting an appliance to a WIFI network**

(30) Priority: 10.06.2013 US 201313913879
(71) Applicant: Whirlpool Corporation, Benton Harbor, MI 49022 (US)
(72) Inventor: Ebrom, Matthew P., 21025 Comerio (IT)
(74) Representative: Guerci, Alessandro

(57) **Abstract**

A method of provisioning an appliance (12-22) to connect to a Wi-Fi network (24) includes a mobile device (26) having an encryption key to enable secure communication in the Wi-Fi network (24), and a means to wirelessly communicate with the appliance (12-20). A wireless communication device (34, 46) and a software protocol in the appliance (12-22) are configured to operate in an unsecured short range configuration mode by reducing transmission power and in a long range configuration mode where transmission power is not reduced. By placing the wireless communication device (34, 46) into the short range configuration mode and moving the mobile device (26) to a position within the short range to establish communication with the wireless communication device (34, 46), the encryption key may be transmitted from the mobile device (26) to the appliance (12-22) via the wireless communication device (34, 46) without security. The wireless communication device (34, 46) may then be placed into the long range mode to securely connect to the Wi-Fi network (24).

## Description

### FIELD OF THE DISCLOSURE

This disclosure relates generally to appliances, and, more particularly, to methods and apparatus to connect appliances to Wi-Fi networks.

### DESCRIPTION OF RELATED ART

Wi-Fi is a popular technology that allows an electronic device to exchange data wirelessly with radio waves over a computer network, including high-speed Internet connections. A device that can use Wi-Fi such as a personal computer, video-game console, Smartphone, digital camera, tablet or digital audio player can connect to a network resource such as the Internet via a wireless network access point. Such an access point (or hotspot) has a range of about 20 meters (65 feet) indoors and a greater range outdoors.

All of the electronic devices associated with a particular Wi-Fi network belong to a service set. Every service set is identified by a service set identifier (SSID) that is normally a human-readable text string and commonly called the "network name." To join a Wi-Fi network, an electronic device must have access to the SSID. Additionally, wireless access points, such as a wireless router, come with built-in encryption schemes such as Wi-Fi Protected Access (WPA) and Wi-Fi Protected Access II (WPA2) to provide a level of security to a wireless network. Encryption schemes typically require an electronic device to transmit a password along with the SSID to the wireless router to establish a connection to the wireless network.

Some wireless communication devices may not have an interface through which connection information such as the SSID and the password may be entered. Consequently, the connection information may be transmitted from another electronic device to the wireless communication device without the interface.

### SUMMARY

One example is directed to a method of provisioning an appliance to connect to a Wi-Fi network. The method includes having a mobile device with an encryption key to enable secure communication with a wireless access point (WAP) in the Wi-Fi network, and a means to wirelessly communicate with the appliance. Also, a wireless communication device and a software protocol are provided in the appliance. The software protocol is configured to operate the wireless communication device and the mobile device in an unsecured short range configuration mode by reducing transmission power and in a long range configuration mode where transmission power is not reduced. The short range excludes communication between the wireless communication device and the WAP and the long range includes communication between the wireless communication device and the WAP. By placing the wireless communication device into the short range configuration mode and moving the mobile device to a position within the short range to establish communication with the wireless communication device, the encryption key may be transmitted from the mobile device to the appliance via the wireless communication device without security. Finally, the wireless communication device may be placed into the long range configuration mode to securely connect to a home Wi-Fi network via the WAP using the encryption key.

### BRIEF DESCRIPTION OF THE DRAWINGS

FIG. 1 is a representation of an example home Wi-Fi network to which a set of home appliances are securely connected through a WAP.
FIG. 2 is a flowchart of an example method of provisioning an appliance to connect to a home Wi-Fi network.

### DETAILED DESCRIPTION

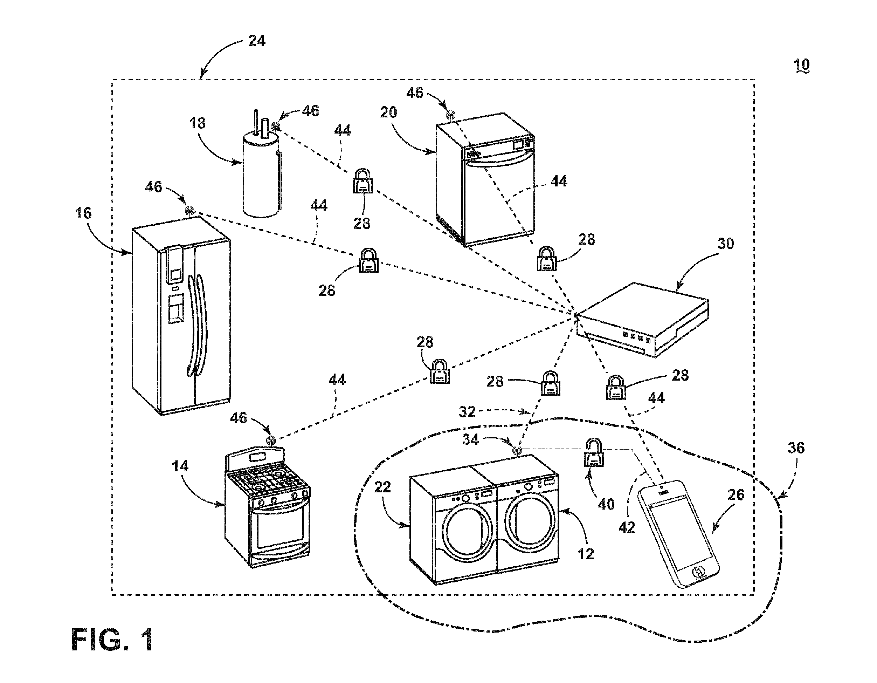

FIG. 1 is a representation of an example home Wi-Fi network 24 to which a set of home appliances are securely connected through a WAP such as a wireless router 30. Home appliances such as a clothes washing machine 12, an oven 14, a refrigerator 16, a hot water heater 18, a dishwasher 20, a clothes drying machine 22 may be equipped with a wireless communication device 34, 46 to connect via the wireless router 30 to the Wi-Fi network 24. Also, mobile devices such as a smart phone 26 may connect to the wireless router 30. The Wi-Fi network 24 may allow the home appliances 12, 14, 16, 18, 20 and 22 to exchange data wirelessly over a computer network.

The wireless router 30 may connect the group of wireless communication devices 26, 34, 46 to each other as well as to an adjacent wired local area network (LAN) (not shown). The wireless router 30 resembles a network hub, relaying data between connected wireless communication devices 26, 34, 46 in addition to a connected wired device (not shown), such as an Ethernet hub or switch, allowing wireless communications devices to communicate with other wired devices.

The connections 32, 44 between the wireless communications devices 26, 34, 46 and the wireless router 30 may be secured connections 28. Secure connections 28 typically require an encryption that further requires the wireless communication device 26, 34, 46 initially to transmit a password for a given SSID and encryption scheme. If the SSID for the network 24 is hidden, the wireless communication device 26, 34, 46 may not know the SSID and it must somehow be provided. Sometimes a secure connection 28 can be established using a Wi-Fi Protected Setup (WPS) personal identification number (PIN) instead of an SSID and/or a password. WPS is an alternate form of network configuration that can establish secure connection through a simple PIN that is stored in the WAP. The data required to establish a secure connection, whether SSID and/or password, or WPS PIN, or other encryption scheme may be termed herein "encryption key."

The wireless communication devices 34, 46 may be any type of device either integrally implemented into the appliance or installed post-production that enables connection and communication on the Wi-Fi network 24. For example, the wireless communication device 34, 46 may be a software-defined radio. A software-defined radio is a radio communication system where components that have been typically implemented in hardware (e.g. mixers, filters, amplifiers, modulators/demodulators, detectors, etc.) are instead implemented by means of software on an embedded system. The embedded system may then be coupled to an antenna for connection to the Wi-Fi network 24.

Additionally, the wireless communication devices 34, 46 may be configured as a software enabled-access point commonly referred to as a SoftAP. SoftAP is used to make a wireless client antenna such as an antenna provided one of the wireless communication devices 34, 46 function as both a WAP and a client. As a client, the wireless communication device 34, 46 may wirelessly communicate 32 with the wireless router 30. As a WAP, the wireless communication device 34, 46 may establish a second Wi-Fi network 36 for wireless communication 42 with other wireless devices such as a smart phone 26.

The wireless communication device 34, 46 may not have an interface capable of enabling manual entry of an encryption key, such as an SSID or a password necessary for establishing a secure connection 28 with the wireless router 30 in the Wi-Fi network 24. To establish a secure connection 28 to the Wi-Fi network 24, a mobile device such as a smart phone 26 having an encryption key to enable secure communication with the wireless router 30 may be brought in close proximity to the wireless communication device 34 of an appliance such as a clothes washing machine 12. The washing machine 12 may operate the wireless communication device 34 by a protocol that enables the smart phone 26 and the wireless communication device 34 to insecurely communicate 40 via a connection 42 of a short range network 36. A user of the smart phone 26 may then transmit the encryption key of the Wi-Fi network 24 to the wireless communication device 34 via the connection 42 of the short range network 36.

The wireless communication device 34 may now connect to the Wi-Fi network 24 by transmitting the encryption key for the Wi-Fi network 24 over a secure connection 28.

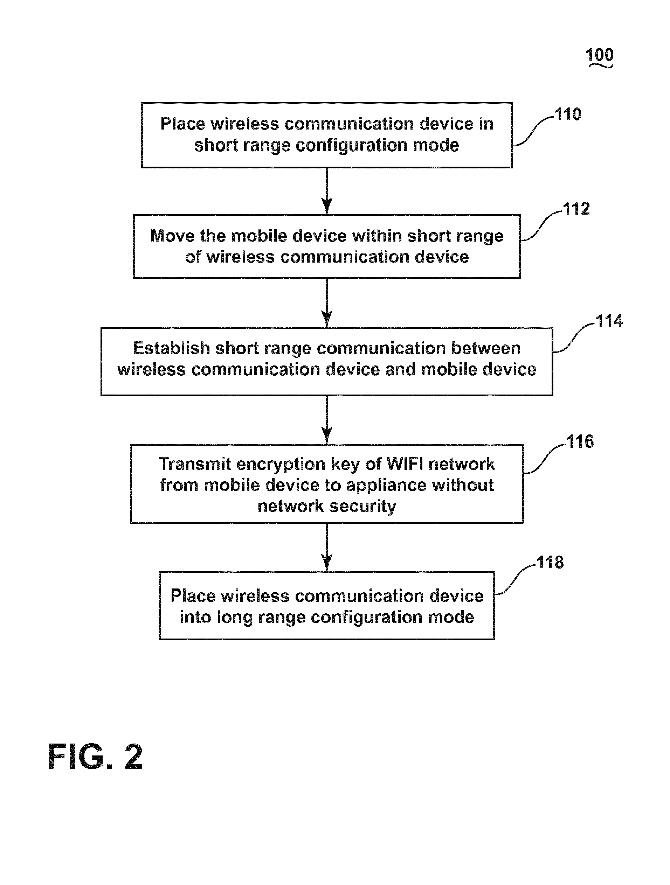

Referring now to the flowchart in FIG. 2, an example method 100 of provisioning an appliance to establish a secure connection to a home Wi-Fi network 24 is illustrated. A mobile device such as the smart phone 26 having an encryption key such as an SSID and password to enable the wireless communication 44 via the secure connection 28 with the wireless router 30 in the Wi-Fi network 24, may also communicate with an appliance such as a clothes washer 12 via the wireless communication 42. The wireless communication 42 between the mobile device 26 and the appliance 12 occurs in part through the wireless communication device 34 provided on the appliance 12.

The appliance 12 also implements SoftAP that is configured to operate the wireless communication device 34 and the mobile device 26 in an unsecured short range configuration mode. The short range configuration mode provides for the wireless communication 42 between the mobile device 26 and the wireless communication device 34 via the unsecured connection 40 by reducing the transmission power of the wireless communication 42. The range of the wireless communication 42 is limited to substantially exclude wireless communication 32 between the wireless communication device 34 and the wireless router 30. Depending on the implementation of wireless devices with particular consideration for the wireless antennas used by the wireless communication device 34 and the mobile device 26, the transmitted power may be reduced to limit the range of the wireless communication 42 between the wireless communication device 34 and the mobile device 26 to less than 1 meter. Whereas the typical transmission power for wireless communication in a Wi-Fi network ranges from about 15 milliWatts (mW) to 100 mW, the short range configuration mode may limit the transmission power for wireless communication 42 to less than 15 mW. Ideally, the transmission power is selected and/or controlled be the least amount of power necessary to permit wireless communication 42 between the mobile device 26 and the wireless communication device 34.

The appliance 12 may additionally or alternatively provide via SoftAP a long range configuration mode where the transmission power is not reduced. In the long range configuration mode, the wireless communication device 34 of the appliance may wirelessly communicate 32 with the router 30 as a WAP in a secure connection 28. As the long range configuration mode may allow for typical Wi-Fi wireless communication 32, the transmitted power may be about or greater than 15 mW.

To provision the appliance 12 to connect to the home Wi-Fi network 24, initially at step 110, the appliance 12 may place the wireless communication device 34 into the short range configuration mode. Alternatively or additionally, the appliance 12 may automatically place the wireless communication device 34 into the short range configuration mode anytime the appliance is not connected to the home Wi-Fi network 24. Then, at step 112, a user may move the mobile device 26 to a position within the short range of the short range configuration mode to establish communication 42 between the wireless communication device 34 and the mobile device 26 at step 114.

The mobile device 26 may then transmit to the appliance 12 via the wireless communication device 34 an encryption key without security at step 116. For example, the mobile device may transmit an SSID and a password to establish a secure connection 28 to the network 24. The user, by way of the mobile device 26, may manually input the encryption key for transmission to the wireless communication device 34. For most mobile devices such as a smart phone, tablet or laptop, manual entry of the encryption key may include an application running on the mobile device that accepts the input of data by typing the characters of the encryption key on a keyboard or, in the case of mobile devices equipped with a touchscreen, a virtual keyboard on a display of the mobile device. Alternatively, most smart phones and many tablets and laptops include a capability for voice entry of data, including the encryption key, by voice recognition software. For mobile devices including wearable computers, for example Google Glass^{tm}, voice entry of the data may be the preferred method of inputting the encryption key. Other methods of inputting the encryption key may be used depending upon the implementation.

The appliance 12 may then place the wireless communication device 34 into long range communication mode at step 118. Placing the wireless communication device 34 into long range communication mode may occur automatically after the wireless communication device 34 detects the encryption key transmitted from the mobile device 26 by wireless communication 42 across the unsecured connection 40. Alternatively, the user may manually set the wireless communication device 34 into the long range configuration mode by, for example, pressing a button provided on the appliance 12. Additionally, the appliance 12 may automatically terminate the short range configuration mode after the encryption key is transmitted from the mobile device 26 to the wireless communication device 34 without security by wireless communication 42. At this point, the wireless communication device 34 may establish communication with the wireless router 30 using the encryption key.

If the encryption key were to fail to properly transmit from the mobile device 26 to the wireless communication device 34 by the provisioning method 100 outlined above, an error notification may be generated and displayed on either the mobile device 26 and/or a display provided on the appliance 12. Similarly, if the encryption key has been improperly entered or properly entered but failed to properly transmit from the wireless communication device 34 to the wireless router 30, an error notification may be generated and displayed on either the mobile device 26 or a display provided on the appliance 12.

## Claims

1. A method of provisioning an appliance (12-22) to connect to a Wi-Fi network (24) by way of a mobile device (26) having an encryption key to enable secure communication with a wireless access point (30) in the Wi-Fi network (24) and a means to wirelessly communicate with the appliance (12-22), wherein the appliance (12-22) has a wireless communication device (34, 46) and a software protocol configured to operate the wireless communication device (34, 46) and the mobile device (26) in an unsecured short range configuration mode by reducing transmission power and a long range configuration mode where transmission power is not reduced, and wherein short range excludes communication between the wireless communication device (34, 46) and the wireless access point (30) and long range includes communication between the wireless communication device (34, 46) and the wireless access point (30), the method comprising:
placing the wireless communication device (34, 46) into the short range configuration mode;
moving the mobile device (26) to a position within the short range to establish communication with the wireless communication device (34, 46);
transmitting the encryption key from the mobile device (26) to the appliance (12-22) via the wireless communication device (34, 46) in the unsecured short range configuration mode without security;
placing the wireless communication device (34, 46) into the long range configuration mode; and
establishing communication with the wireless access point (30) using the encryption key.

2. A method according to claim 1, wherein the short range configuration mode limits the communication between the mobile device (26) and the wireless communication device (34, 46) to less than 1 meter.

3. A method according to any of the preceding claims, where the reduced transmission power in the unsecured short range configuration mode is between 0 and 15 milliwatts.

4. A method according to any of the preceding claims, further comprising providing the encryption key to the mobile device (26) via manual entry or voice entry into an application on the mobile device (26).

5. A method according to any of the preceding claims, further comprising placing the wireless communication device (34, 46) into the long range configuration mode automatically after the wireless communication device (34, 46) detects the encryption key transmitted by the mobile device (26).

6. A method according to any of the preceding claims, further comprising generating an error notification if the encryption key fails to transmit from the mobile device (26) to the wireless communication device (34, 46).

7. A method according to any of the preceding claims, further comprising generating an error notification if the wireless communication device (34, 46) fails to access the wireless access point (30) after the step of placing the wireless communication device (34, 46) into the long range configuration mode.

8. A method according to any of the preceding claims, further comprising automatically placing the wireless communication device (34, 46) into the short range configuration mode when the appliance (12-22) is not connected to a Wi-Fi network (24).

9. A method according to any of the preceding claims, wherein transmitting the encryption key from the mobile device (26) to the appliance (12-22) via the wireless communication device (34, 46) without security is followed by terminating the short range communication mode.

10. A method according to any of the preceding claims, wherein the encryption key comprises an SSID and a password.

11. An appliance (12-22) for securely connecting to a wireless access point (30) in a Wi-Fi network (24), comprising:
a wireless communication device (34, 46), and
a software protocol configured to operate the wireless communication device (34, 46) in an unsecured short range configuration mode by reducing transmission power and a long range configuration mode where transmission power is not reduced, and wherein short range excludes communication between the wireless communication device (34, 46) and the wireless access point (30) and long range includes communication between the wireless communication device (34, 46) and the wireless access point (30),
wherein the appliance (12-22) will be provisioned for secure communication with the wireless access point (30) when a mobile device (26), having an encryption key to enable secure communication with the wireless access point (30) and having a means to wirelessly communicate with the appliance (12-22), transmits the encryption key unsecured to the appliance (12-22) when it is in the short range and the wireless communication device (34, 46) is in the unsecured short range configuration mode.

12. An appliance (12-22) according to claim 11, wherein the transmission power in the long range configuration mode is greater than 15 mW and in the short range configuration mode is less than 15 mW.

13. An appliance (12-22) according to claims 11 to 12, wherein the wireless communication device (34, 46) is a software-defined radio configured as a software-enabled access point (30).

14. An appliance (12-22) according to claims 11 to 13, wherein the software protocol is configured to automatically place the wireless communication device (34, 46) into the short range configuration mode when the appliance (12-22) is not connected to the Wi-Fi network (24).

15. An appliance (12-22) according to claims 11 to 14, wherein the software protocol is configured to place the wireless communication device (34, 46) into the long range configuration mode automatically after the wireless communication device (34, 46) detects the encryption key transmitted by the mobile device (26).
